# EUROPEAN PATENT APPLICATION

(11) **EP 4 682 702 A1**
(43) Date of publication of application: **21.01.2026**
(21) Application number: 25186389.0
(22) Date of filing: 30.06.2025
(51) Int. Cl.: G06F 3/12, G06F 3/048

(54) **INFORMATION PROCESSING APPARATUS, METHOD FOR CONTROLLING INFORMATION PROCESSING APPARATUS, AND STORAGE MEDIUM**

(30) Priority: 19.07.2024 JP 2024115542
(71) Applicant: CANON KABUSHIKI KAISHA, Tokyo 146-8501 (JP)
(72) Inventor: HORI, Daisuke, Tokyo, 146-8501 (JP)
(74) Representative: Canon Europe Limited

(57) **Abstract**

There is provided a non-transitory computer-readable storage medium storing executable instructions, which when executed by one or more processors of an information processing apparatus, cause the information processing apparatus to perform a control method. The information processing apparatus is communicably connected to an image forming apparatus. The control method includes determining S603 whether a function of blocking operations of printer drivers offered by a manufacturer of the image forming apparatus is enabled, and displaying S604, in a case where the function is enabled, print queues associated with the printer drivers in a gray-out state in a combo box for selecting a printing destination. The printer drivers in the gray-out state are associated with the function of blocking operations. The printer drivers in the gray-out state are unselectable.

## Description

### BACKGROUND

### Field of the Technology

The present invention relates to an information processing apparatus, a method for controlling an information processing apparatus, and a storage medium.

### Description of the Related Art

In a conventional print application for enabling printing, a known technique determines which one of a plurality of print queues is enabled to issue a suitable print instruction, and displays the print queue. For example, Japanese Patent Application Laid-Open Publication No. 2015-106263 discusses a technique for identifiably displaying to a user a print queue that enables printing with a user-selected print setting from among print queues having different print setting functions.

Meanwhile, there has recently been discussed a technique in which an operating system (OS) blocks the functions of printer drivers offered from printer manufacturers (hereinafter referred to as vendor printer drivers). The technique can provide a secure environment where the printing-related weakness of the OS is not attacked by an attacker. Prior art does not take such a secure environment into consideration. Under a secure environment, a print failure may possibly occur when a print application makes an attempt to use the function of a vendor printer driver.

### SUMMARY

According to a first aspect of the present invention, there is provided a non-transitory computer-readable storage medium as specified in claim 1. Optional features are specified in claims 2 to 8. According to a second aspect of the present invention, there is provided a method for controlling an information processing apparatus as specified in claim 9. Optional features are specified in claims 10 to 16. According to a third aspect of the present invention, there is provided an information processing apparatus as specified in claim 17. Optional features are specified in or derivable from claims 2 to 8 and/or 10 to 16.

Features of the present disclosure will become apparent from the following description of embodiments with reference to the attached drawings. The following description of embodiments is described by way of example.

### BRIEF DESCRIPTION OF THE DRAWINGS

Fig. 1 is a block diagram illustrating a hardware configuration of a printing system according to an embodiment of the present invention.
Fig. 2 illustrates an example of an image forming apparatus according to the embodiment of the present invention.
Fig. 3 illustrates a software configuration of the printing system according to the embodiment of the present invention.
Fig. 4 illustrates an example of a print application according to the embodiment of the present invention.
Figs. 5A to 5E illustrate examples of a displayed printer combo box according to the embodiment of the present invention.
Fig. 6 is a flowchart illustrating processing for determining display items of the printer combo box according to the embodiment of the present invention.
Figs. 7A to 7E illustrate examples of display formats for the reason why print queues associated with vendor printer drivers are disabled according to the embodiment of the present invention.
Fig. 8 illustrates an example of print history display according to the embodiment of the present invention.

### DESCRIPTION OF THE EMBODIMENTS

Embodiments of the present invention will be described in detail below with reference to the accompanying drawings. The following embodiments do not limit the present invention within the scope of the appended claims. That is to say the broadest scope of the invention is defined by the claims rather than the embodiments. The embodiments provide an explanation of how the invention may be taken into effect rather than set out the broadest scope of the invention. Not all of the combinations of the features described in the embodiments are indispensable to the solutions for the present invention. That is to say that the advantageous solutions provided by the present invention may be provided by one or more features and not all features are necessary for the advantageous solutions. In each drawing, identical members are assigned the same reference numerals, and duplicated descriptions thereof will be omitted. Each discussed embodiment can be implemented solely or as a combination of a plurality of the embodiments or features thereof where necessary or where the combination of elements or features from individual embodiments in a single embodiment is beneficial.

### <Hardware Configuration of Printing System>

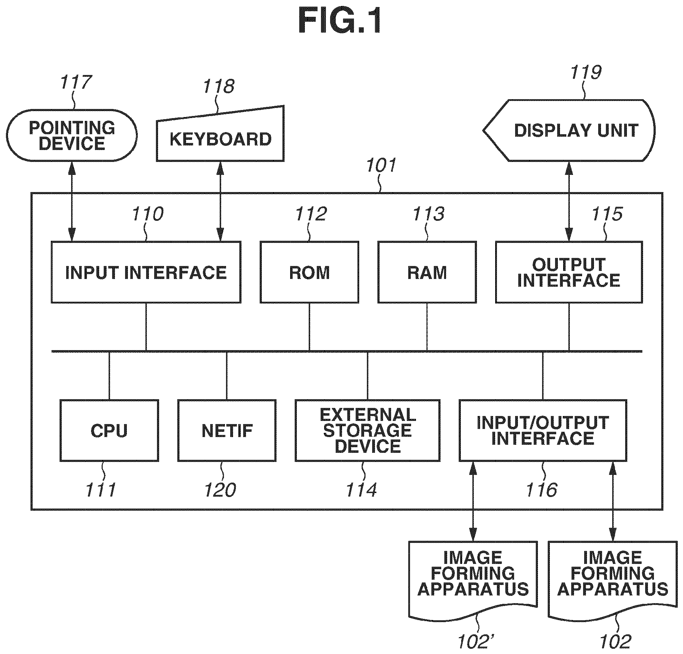

Fig. 1 is a block diagram illustrating a hardware configuration of a printing system. Referring to Fig. 1, a host computer 101 as an example of an information processing apparatus includes an input interface 110, a Central Processing Unit (CPU) 111, a Read Only Memory (ROM) 112, a Random Access Memory (RAM) 113, an external storage device 114, an output interface 115, and an input/output interface 116.

The input interface 110 is connected to input devices such as a keyboard 118 and a pointing device 117. The output interface 115 is connected to a display device such as a display unit 119. A network interface (NETIF) 120 controls data communication with an external apparatus via a network.

The initial program is stored in the ROM 112. The external storage device 114 stores application programs, an operating system (OS), print data generation software, and other various kinds of data. The RAM 113 is used as a work memory used in executing various programs stored in the external storage device 114, and allows various programs to operate in the host computer 101.

According to the present embodiment, the functions of the host computer 101 (described below) and processing related to flowcharts (described below) are implemented when the CPU 111 executes processing according to the procedures of the programs stored in the ROM 112.

The image forming apparatus 102 as a device is communicably connected to the host computer 101 via the input/output interface 116. A plurality of the image forming apparatuses 102 may be connected to the host computer 101. Referring to the example in Fig. 1, the image forming apparatuses 102 and 102' are connected. Although the image forming apparatus 102 and the host computer 101 are separately configured, these apparatuses may be configured as one information processing apparatus.

The host computer 101 may be a desktop personal computer (PC), a smart phone, or a notebook computer.

### <Example of Image Forming Apparatus>

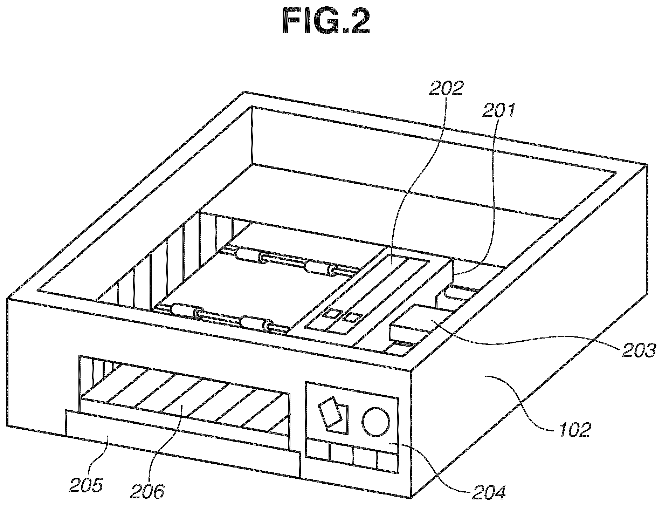

Fig. 2 schematically illustrates an example of the image forming apparatus 102. The image forming apparatus 102 includes a carriage 201, an ink tank 202, a packing material 203, a touch panel 204, a paper feed slot 205, and a print result discharge port 206, and performs printing by discharging ink on paper. The printing method of the image forming apparatus 102 is not limited to an ink discharge method, but printing may be performed by another method such as an electrophotographic method.

### <Software Configuration of Printing System>

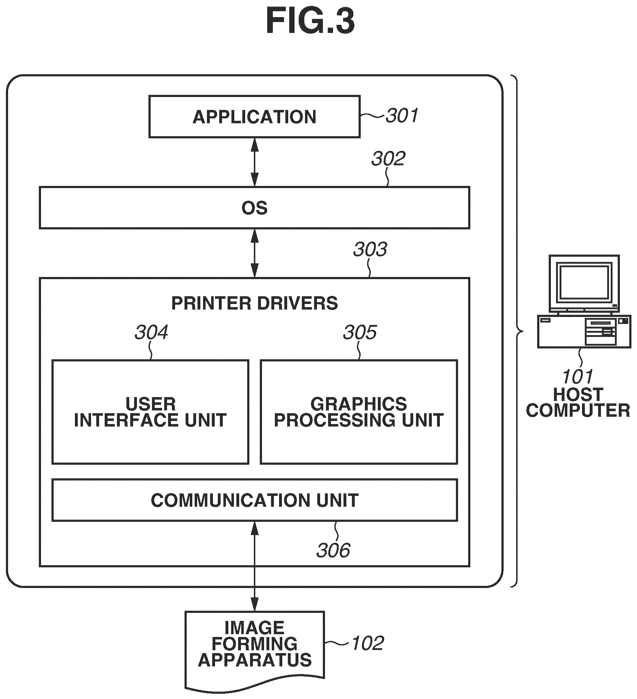

Fig. 3 schematically illustrates a software configuration of the printing system according to the present embodiment. The following descriptions will be made on the premise that Windows (registered trademark of Microsoft) as a form of the present embodiment is mounted as an OS 302. However, the disclosure is not limited to its use with Windows and is capable of being used with other OS.

An application 301 is software capable of laying out image data for printing and then performing printing. Examples of the application 301 include document creation software, spreadsheet software, photographic software, web browsers, and other various applications capable of generating and displaying printing target images.

The user generates, displays, and selects print data on the application 301 and then makes various print settings to printer drivers 303 (more preferably, the print queue associated with the printer drivers 303). Examples of types of the printer drivers 303 include vendor printer drivers offered by manufacturers of image forming apparatuses and printer drivers (Internet Printing Protocol (IPP) class drivers) bundled with OS's offered by OS providers. The user can use desired types of printer drivers. IPP class drivers may be referred to as print software.

A screen for making print settings is displayed by a user interface unit 304 called by the application 301 via the OS 302. The print setting screen allows the user to make various print settings, for example the print settings including specification of the paper size and printing orientation. By using OS functions such as PrintTicket and PrintCapabilities, the application 301 can directly accept a print setting change instruction from the user on the screen of the application 301 without displaying the above-described print setting screen.

After completion of print setting, the user presses a print button on the application 301 to instruct the application 301 to perform printing.

Upon reception of the print instruction from the user, the application 301 generates print data and transfers the print data to a graphics processing unit 305 of the printer drivers 303 via the OS 302. The graphics processing unit 305 subjects the print data to color processing and rendering to convert the format of the print data into a data format interpretable by the image forming apparatus 102, and transmits the print data to the image forming apparatus 102 via a communication unit 306. Then, ink is discharged from the recording head to a recording medium fed to the image forming apparatus 102, and then an image is formed.

### <Example of Print Application>

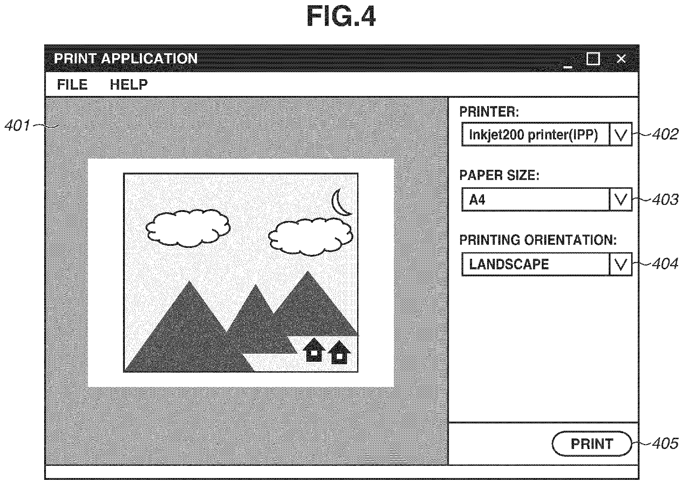

Fig. 4 illustrates a screen of a photographic print application as an example of the printable application 301. The image input method is not particularly illustrated. Examples of image input methods include a method for opening the Explorer from the File menu of the application 301 and then inputting an image, and a method for directly inputting an image to the application 301 with a drag-&-drop operation.

Any image format, for example Bitmap or Tiff, is applicable as long as the image can be interrupted by the application 301. Put another way, any image format may be used provided that the application 301 can interrupt it.

Applicable image formats may also include vector formats such as Extensible Markup Language (XML) Paper Specification (XPS) and Enhanced Metafile (EMF). The application 301 is not limited to a photographic print application but may be document creation software, spreadsheet software, or a web browser. The present invention is not limited thereto.

A preview region 401 displays a print image to be printed by the image forming apparatus 102. Fig. 4 illustrates an example of an image to be printed in a landscape orientation on A4 size paper. The user may be able to directly adjust the size and position of the image by using a pointing device while monitoring the preview image.

A Printer combo box 402 is an item (object or combo box) for accepting a print queue (printing destination) specification. According to the present embodiment, the Printer combo box 402 can display both print queues associated with vendor printer drivers and print queues associated with IPP class drivers installed in the host computer 101.

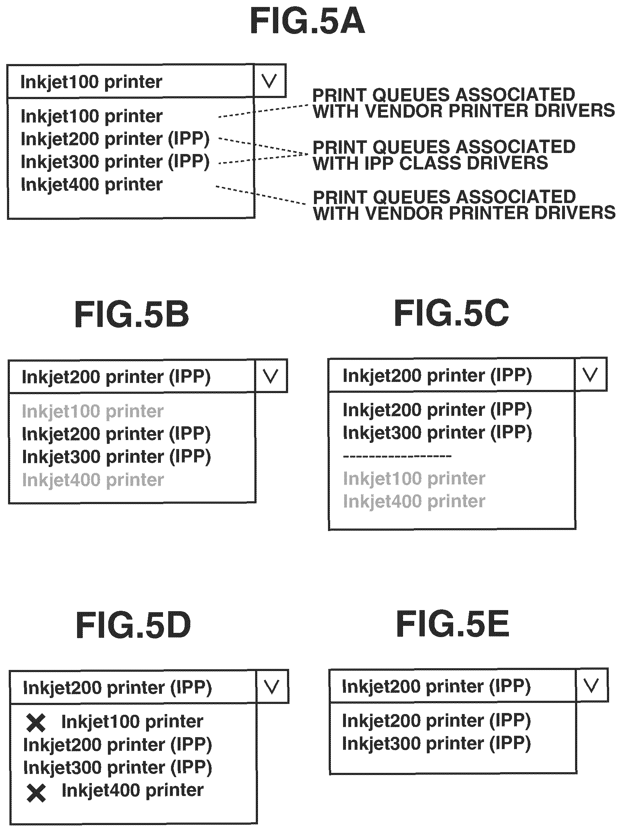

Fig. 5A illustrates examples of options displayed in the Printer combo box 402. Print queues associated with IPP class drivers are supplied with a character string "(IPP)". However, the present invention is not limited thereto. For example, the character string may be omitted and/or an icon may be supplied.

A Paper Size combo box 403 accepts a specification of the paper size to be used for printing. A Printing Orientation combo box 404 accepts a specification of the printing orientation. For a selected print queue, the application 301 acquires capability information that can be set to the Paper Size combo box 403 and the Printing Orientation combo box 404 by using an OS function such as PrintCapabilities.

A Print button 405 transmits print setting information set to the combo boxes 403 and 404 and layout information (drawing information) edited in the preview region 401 by the user to the selected print queue.

The following describes in detail the present embodiment of the print application operating on the OS that can limit the functions of vendor printer drivers.

### <Processing for Determining Display Items of Printer Combo Box>

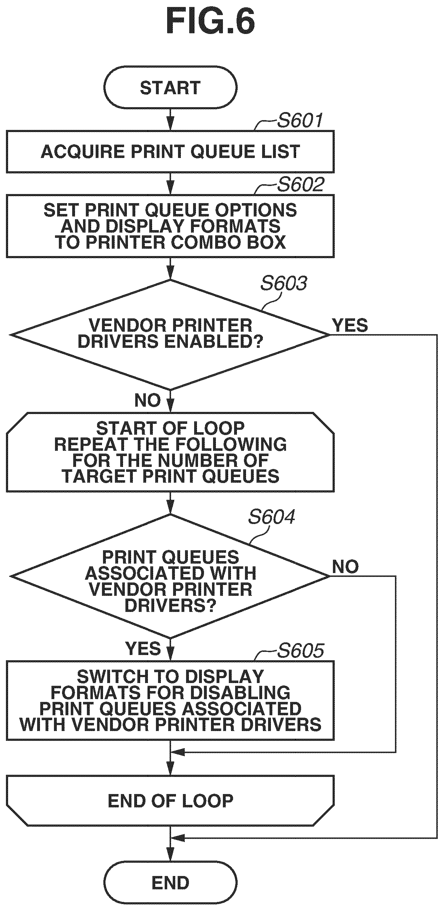

Fig. 6 is a flowchart illustrating a process in which the application 301 determines display items of the Printer combo box 402 according to the present embodiment. This processing is performed when the application 301 is activated and at any desired timing when the Printer combo box 402 needs to be updated.

In step S601, the application 301 acquires a list of printing target print queues by using a function of the OS. Then, the processing proceeds to step S602.

In step S602, the application 301 sets options and display formats of the printing target print queue to be displayed, to the Printer combo box 402. Then, the processing proceeds to step S603. In this case, for example, the print application 301 may select only print queues associated with the image forming apparatus that can guarantee the print function from the application 301, as printing target print queues to be displayed for options. As display formats, the character string "(IPP)" may be added to print queues associated with IPP class drivers and/or icons may be switched or included.

In step S603, the application 301 determines whether vendor printer drivers are enabled in an environment, by using an Application Programming Interface (API) of the OS. If vendor printer drivers are disabled, the processing proceeds to the subsequent loop. If vendor printer drivers are enabled, the processing exits this flowchart.

Examples of environments where vendor printer drivers are disabled include an environment where Windows Protected Print Mode (hereinafter referred to as WPP) included in Windows (registered trademark of Microsoft) is enabled. If WPP is enabled, the security performance improves. For example, it becomes impossible for an attacker to trick a spooler by using a symbolic link into reading a malicious code. Therefore, a user who wants to improve security can receive the benefit by enabling WPP.

If WPP is enabled, on the other hand, the installation of vendor printer drivers is blocked, and vendor printer drivers having been used are disabled.

This means that, in a WPP-enabled environment, the user is forced to use IPP class drivers.

In this case, although no particular problem occurs on the user using only IPP class drivers, some problems may occur on the user using vendor printer drivers. For example, even if WPP is enabled, vendor printer drivers remain in the environment (printing and UI opening operations are disabled).

Therefore, the user may select as a print target a wrong print queue associated with vendor printer drivers by mistake, possibly resulting in subsequent printing failures. If the user selects a print queue associated with a vendor printer driver, the application 301 itself may crash or enter an erroneous operation.

To solve the above-described problem, the application 301 according to the present embodiment repetitively performs the processing in steps S604 and S605 for all of the target print queues in the Printer combo box 402. Thus, the application 301 switches to display formats for disabling print queues associated with vendor printer drivers.

In step S604, the application 301 checks whether the print queue currently being checked is associated with a vendor printer driver. If the print queue is associated with a vendor printer driver (YES in step S604), the processing proceeds to step S605. If the print queue is not associated with a vendor printer driver (NO in step S604), the application 301 checks the next print queue.

In step S605, the application 301 switches to display formats for disabling print queues associated with target vendor printer drivers, and checks the next print queue. When the application 301 completes the check processing for all of the target print queues, the processing exits this flowchart.

Examples of the Printer combo box 402 displayed after completion of the processing of this flowchart are illustrated in Figs. 5B, 5C, 5D, and 5E.

Referring to the example in Fig. 5B, print queues associated with vendor printer drivers are displayed in a gray-out state or disabled. This enables preventing the user from selecting by mistake a print queue associated with a vendor printer driver.

Referring to the example in Fig. 5C, print queues associated with vendor printer drivers are displayed in a gray-out state, and print queues associated with IPP class drivers are preferentially arranged over (displayed above) print queues associated with vendor printer drivers. This makes it easier for the user to select a print queue associated with an IPP class driver.

The example in Fig. 5D is another version of the display format in Fig. 5B in which print queues associated with vendor printer drivers are supplied with a "x" icon so as to be unselectable.

Referring to the example in Fig. 5E, print queues associated with vendor printer driver are deleted from options. This allows the user to concentrate only on enabled print queues when selecting a print queue.

In an environment where the use of vendor printer drivers is limited, the above-described processing enables preventing printing failures or an application crash and also enables improving the user's operability in selecting a print queue.

Although WPP has been mainly described above, any type of environment is applicable as long as the functions of vendor printer drivers are set to be limited. The present invention is not particularly limited thereto.

The first embodiment has been described above centering on the display format of the Printer combo box 402 in a case where WPP is enabled and the functions of vendor printer drivers are disabled. Although the first embodiment provides an effect of preventing printing failures, there remains an unsolved problem that a user not understanding WPP does not know the reason why print queues associated with vendor printer drivers are disabled.

Examples of cases where the print queues are disabled include a case where a system administrator silently forces WPP by changing the group policy and a case where the user unintentionally enables WPP. In these cases, the user may not be able to understand why print queues associated with vendor printer drivers are suddenly disabled.

A second embodiment will be described below centering on a solution for the above-described problem. More specifically, the second embodiment displays the reason why print queues associated with vendor printer drivers are disabled.

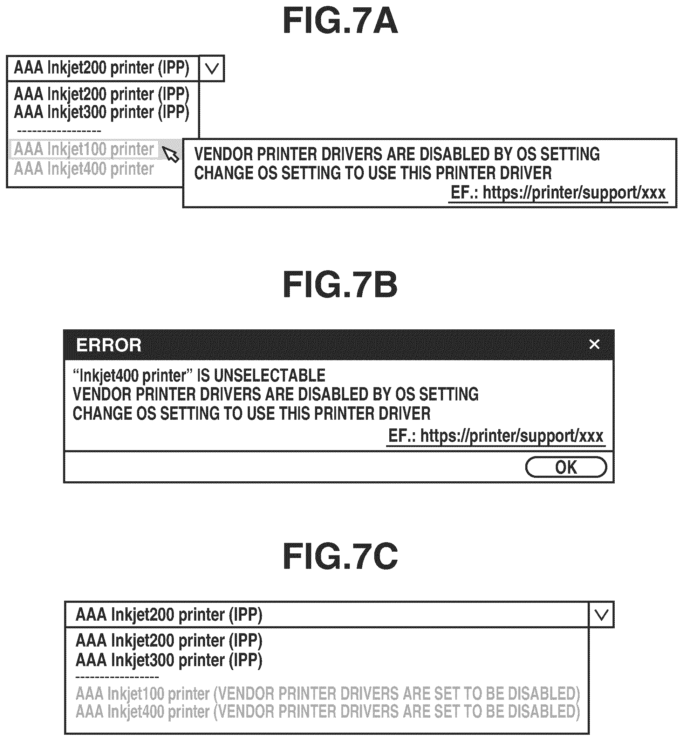

Figs. 7A to 7E illustrate examples of display formats for describing the reason why print queues associated with vendor printer drivers are disabled.

Fig. 7A illustrates an example of a tooltip appearing when the mouse cursor passes over an option of a print queue associated with a vendor printer driver in the Printer combo box 402. The tooltip notifies that print queues associated with vendor printer drivers are disabled.

Fig. 7B illustrates an example of a dialog appearing when an option of a print queue associated with a vendor printer driver is pressed in the Printer combo box 402. The dialog notifies that print queues associated with vendor printer drivers are disabled.

Fig. 7C illustrates an example of the Printer combo box 402 displaying names of options of print queues associated with vendor printer drivers. The combo box 402 simply notifies that print queues associated with vendor printer drivers are disabled.

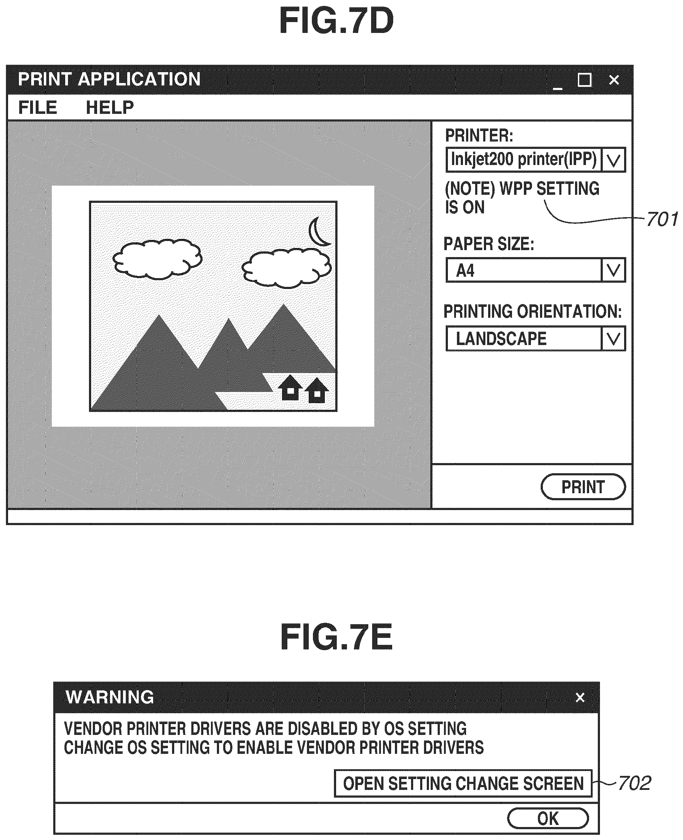

Fig. 7D illustrates an example where a direct message 701 appears on the screen of the application 301. The message 701 notifies that print queues associated with vendor printer drivers are disabled.

Fig. 7E illustrates a dialog displayed upon the activation of the application 301. The dialog notifies that print queues associated with vendor printer drivers are disabled.

The display formats (Figs. 7A to 7E) implemented in the application 301 allows the user to understand the environment setting with which print queues associated with vendor printer drivers are disabled. Referring to the example in Fig. 7E, an Open button 702 for opening a setting screen for setting and changing WPP allows the user to change the environment setting to enable print queues associated with vendor printer drivers, as required. Instead of providing the Open button 702 for opening the setting screen, the application 301 may directly change the WPP setting.

According to the first and the second embodiments, the user selects one of print queues associated with printer drivers to be used for printing in a state where a plurality of the image forming apparatuses 102 is connected. However, the present invention is not limited thereto. The present invention is applicable even if only one image forming apparatus 102 is subjected to printing.

In a possible example case, the image forming apparatus 102 subjected to printing has been determined by a system setting and a specification from another application. In this case, the application 301 does not need to display the Printer combo box 402, and selects one print queue associated with a printer driver subjected to printing.

More specifically, if WPP is enabled, the application 301 subjects the print queues associated with IPP class drivers applicable to the target image forming apparatus 102 to printing. If WPP is disabled, the application 301 subjects print queues associated with vendor printer drivers applicable to the target image forming apparatus 102 to printing. This enables preventing printing errors without user operations.

The first and the second embodiments have been described above centering mainly on the display formats of the Printer combo box 402 in a case where the functions of vendor printer drivers are disabled. A third embodiment will be described below focusing on functions other than the Printer combo box 402.

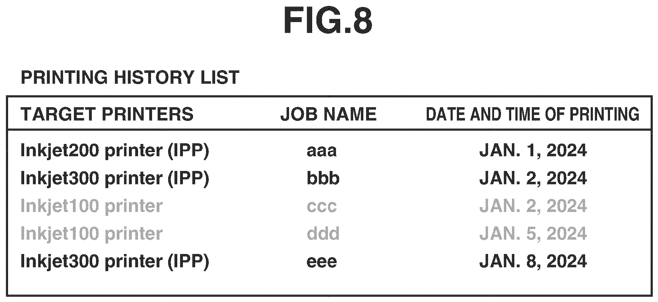

Fig. 8 illustrates an example of a print history list displayed if the printer driver having been enabled becomes disabled at a certain timing because of the WPP setting. The print history list allows the user to confirm the history of print jobs having been printed from the application 301 and issue a reprint instruction.

Referring to Fig. 8, since WPP is enabled at a certain timing, the print history of print queues associated with a vendor printer driver (e.g., print jobs of "Inkjet100 printer") are displayed in a gray-out state, i.e., in a display format for disabling reprinting. This enables preventing print failures when the user makes an attempt to perform reprinting for print queues associated with vendor printer drivers.

Referring to the example in Fig. 8, print jobs of print queues associated with disabled vendor printer drivers are displayed in a gray-out state. However, the print jobs may be supplied with a "x" icon or deleted from the list. The present invention is not particularly limited thereto. Of course, in addition to the print history list, similar processing is also applicable to a list of favorite settings associated with print queues, and a list of editing data associated with print queues.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to various embodiments, it is to be understood that the present disclosure is not limited solely to the disclosed embodiments in each of their entireties. The scope of the following claims is to be accorded the broadest interpretation so as to encompass all such modifications and equivalent structures and functions as would be understood by a skilled addressee.

## Claims

1. A non-transitory computer-readable storage medium storing executable instructions, which when executed by one or more processors of an information processing apparatus, cause the information processing apparatus to perform a control method, the information processing apparatus (101) being communicably connected to an image forming apparatus (102, 102'), the control method comprising:
determining (S603) whether a function of blocking operations of printer drivers offered by a manufacturer of the image forming apparatus is enabled; and
displaying (S605), in a case where the function is enabled, print queues associated with the printer drivers in a gray-out state in a combo box for selecting a printing destination, the printer drivers in the gray-out state being associated with the function of blocking operations, the printer drivers in the gray-out state being unselectable.

2. The non-transitory computer-readable storage medium according to claim 1, wherein, in a case where the function is enabled, print queues associated with print software offered by a provider of an operating system, OS, of the information processing apparatus are preferentially displayed over the print queues associated with the printer drivers in the combo box.

3. The non-transitory computer-readable storage medium according to claim 1 or claim 2, wherein, in a case where the function is enabled, print queues associated with print software offered by a provider of an OS of the information processing apparatus are displayed above the print queues associated with the printer drivers in the combo box.

4. The non-transitory computer-readable storage medium according to any one of claims 1 to 3, wherein information about a reason why the print queues associated with the printer drivers are unselectable is displayed.

5. The non-transitory computer-readable storage medium according to claim 4, wherein the information is displayed in a tooltip when a mouse cursor passes over any one of the print queues associated with the printer drivers.

6. The non-transitory computer-readable storage medium according to claim 4, wherein the information is displayed upon selection of any one of the print queues associated with the printer drivers.

7. The non-transitory computer-readable storage medium according to any one of claims 4 to 6, wherein the information includes information about a method for disabling the function.

8. The non-transitory computer-readable storage medium according to any one of claims 1 to 7, wherein, in a case where the function is enabled, a print history with specified print queues associated with the printer drivers is displayed in a gray-out state.

9. A method for controlling an information processing apparatus communicably connected to an image forming apparatus, the method comprising:
determining (S603) whether a function of blocking operations of printer drivers offered by a manufacturer of the image forming apparatus is enabled; and
displaying (S605), in a case where the function is enabled, print queues associated with the printer drivers in a gray-out state in a combo box for selecting a printing destination, the printer drivers in the gray-out state being associated with the function of blocking operations, the printer drivers in the gray-out state being unselectable.

10. The method according to claim 9, wherein, in a case where the function is enabled, print queues associated with print software offered by a provider of an OS of the information processing apparatus are preferentially displayed over the print queues associated with the printer drivers in the combo box.

11. The method according to claim 9 or claim 10, wherein, in a case where the function is enabled, print queues associated with print software offered by a provider of an OS of the information processing apparatus are displayed above the print queues associated with the printer drivers in the combo box.

12. The method according to any one of claims 9 to 11, wherein information about a reason why the print queues associated with the printer drivers are unselectable is displayed.

13. The method according to claim 12, wherein the information is displayed in a tooltip when a mouse cursor passes over any one of the print queues associated with the printer drivers.

14. The method according to claim 12, wherein the information is displayed upon selection of any one of the print queues associated with the printer drivers.

15. The method according to any one of claims 12 to 14, wherein the information includes information about a method for disabling the function.

16. The method according to any one of claims 9 to 15, wherein, in a case where the function is enabled, a print history with specified print queues associated with the printer drivers is displayed in a gray-out state.

17. An information processing apparatus (101) communicably connected to an image forming apparatus (102, 102'), the information processing apparatus being configured to perform the steps of:
determining (S603) whether a function of blocking operations of printer drivers offered by a manufacturer of the image forming apparatus is enabled; and
displaying (S605), in a case where the function is enabled, print queues associated with the printer drivers in a gray-out state in a combo box for selecting a printing destination, the printer drivers in the gray-out state being associated with the function of blocking operations, the printer drivers in the gray-out state being unselectable.
